# EUROPEAN PATENT SPECIFICATION

(11) **EP 4 422 459 B1**
(45) Date of publication and mention of the grant of the patent: **30.07.2025**
(21) Application number: 22797128.0
(22) Date of filing: 12.10.2022
(51) Int. Cl.: A47J 19/06, A23N 1/00, B65G 25/08

(54) **AUTOMATIC CARROT JUICE DISPENSER**
AUTOMATISCHER KAROTTENSAFTSPENDER
DISTRIBUTEUR AUTOMATIQUE DE JUS DE CAROTTE

(30) Priority: 25.10.2021 LV 210075
(43) Date of publication of application: 04.09.2024
(73) Proprietor: Sulapro, Sia, 5052 Ikskile, Ogres nov. (LV)
(72) Inventor: DA COSTA SILVA, Jorge, 5052 Ikskile, Ogres nov. (LV)
(74) Representative: Kromanis, Artis
(86) International application number: PCT/LV2022/050011
(87) International publication number: WO 2023/075579

(56) References cited:
- WO-A1-2019/144831
- US-A- 2 274 020
- US-A- 4 924 770
- US-A1- 2008 028 943

## Description

### Field of the invention

The present invention relates to juice dispensers, especially to the carrot juice dispensers.

### Background of the invention

The prior art discloses various juice dispensers. Especially well known juice dispensers are orange juice dispensers as disclosed in European patent publications Nos. EP0343488 and EP1692953 as well as in US patent application publication No. US2274020. Typical orange juice dispenser comprises a bunker for storing the fruit to be squashed, an assembly for cutting and squashing the individual citrus fruits, a station for removing a dose of squash, means for washing the squashing elements and for collecting the wash water and the peels of the citrus fruits and a control unit, which controls the assemblies and is adapted to make them operate in succession when activated by a user.

Spherical shape of oranges allow easy handling and accordingly easy design of an automatic orange juice dispenser. When it comes to carrots which have a shape of elongated objects, the principles of oranges juice dispenser do not work. The Korean patent publication No. KR101871330 and US patent application publication No. US2014261019 disclose a manual carrot squeezing apparatus. This apparatus is suitable for manual feed of carrots for squeezing and smashing. It does not provide automatic dispensing. Japanese patent publications Nos. JP3629584 and JP3944868 discloses carrot juice dispensers where the carrots are purred into the bunker and fed for dispensing through various types of screw conveyors. Such carrot juice dispensers are very bulky, hard to manufacture due to the screw conveyors as well as complicated for service (cleaning) again due to screw conveyors and associated elements. Automatic dispensers with screw conveyors would imply that there can be a significant number of crashed carrots in the screw conveyor after a customer uses the dispenser to obtain a bottle/glass of juice. That creates at least two issues in self-service dispensers, where it is normal that not all carrots present in the bunker will be used by a customer. The two issues are: a) if there is a significant amount of time for the next customer to use the dispenser, this next juice will be produced from long time ago crashed carrots left in the screw conveyor; and b) at the end of the day, when the dispenser will be cleaned, there will be a significant amount of crashed carrots that will need to be disposed/thrown away.

Aim of the invention is to design an automatic carrot juice dispenser, which is easy to manufacture, use and service, especially cleaning it.

### Summary of the invention

The aim is reached by a design of an automatic carrot juice dispenser comprising a combined conveyor system reliably transporting carrots from a bunker to a juicer. Reliable transportation of carrots means that each carrot is carefully without damaging it and in controlled order transported to the juicer. The problem of jammed dispenser is avoided, and it can be fully automatic and reliable.

The automatic carrot juice dispenser comprises a frame structure with doors. The frame structure comprises not only a frame itself, but also a casing that covers all elements of the dispenser that are built in the frame structure. The frame structure also may be made as a sheet material construction.

The dispenser comprises a bunker configured for a storage of carrots. The bunker in order to contain the carrots comprises a bunker floor and side walls. The bunker may comprise one or two side walls depending on a chosen configuration of the dispenser. In another embodiment of the invention one side wall may be a separate side wall or another one may be a part of the frame structure so that at least one side wall is integral part of the frame structure. The side wall may be metal sheet wall, a mesh, a net or any other equivalent of the side wall which may hold the carrots within the bunker. The bunker floor comprises an axle so that the bunker floor may swing around said axle like a swing. The axle may be arranged in the middle section of the bunker floor or at one side end of the bunker floor as long as the swing motion of the bunker floor may be provided. The dispenser further comprises a reciprocating means configured to provide reciprocating motion to the bunker floor so that the bunker floor can swing around said axle. The reciprocating means may be selected from the group comprising a pneumatic cylinder, a hydraulic cylinder, electric motor with a cam, motorized linear slide and crank mechanism.

The conveyor system of the dispenser comprises a step feeder. The step feeder is configured to collect carrots from said bunker and move collected carrots upwards by means of reciprocating motion of steps of the step feeder. The reciprocating motion of the steps of the step feeder may be provided by a pneumatic cylinder, a hydraulic cylinder or motorized linear slide. The step feeder is arranged at the bunker floor so that the step feeder forms one or the fourth wall of the bunker to contain the carrots. Aforementioned swinging motion of the bunker floor facilitates loading of carrots onto a step feeder.

At the upper edge of the step feeder a buffer zone gate is arranged. The buffer zone gate is configured to hold at least one carrot and release said carrot by opening said buffer zone gate. Opening of the gate may be provided by a pneumatic cylinder, a hydraulic cylinder, motorized linear slide or any other means allowing to move the buffer zone gate so that the gate may one and the carrot may be released.

The conveyor system of the dispenser further comprises a gravity chute arranged at the upper edge of the step feeder and configured to receive the carrot from the buffer zone gate and to slide the carrot under a gravity to the entrance of the juicer and into said juicer. The gravity chute is so inclined that the carrot is repositioned from generally horizontal or about horizontal orientation at the buffer zone gate to generally vertical or about vertical orientation at the entrance into the juicer. Generally vertical repositioning of the carrot may be supplemented by a deflection wall arranged at the end of the gravity chute. The deflection wall is optional technical feature of the invention. The carrot drops from the step feeder or from the buffer zone gate with its longitudinal axis generally horizontally. Then the carrot slides along the gravity chute and the longitudinal axis of the carrot is changed by approximately 45 degrees towards vertical orientation. Finally, at the end of the gravity chute the carrot drops into the opening or hole of the juicer. In another embodiment of the invention the dispenser may comprise a deflection wall where the carrot sliding out from the gravity chute impacts the deflection wall and the carrot is further rearranged so that its longitudinal axis is generally vertical and the carrot drops into the juicer vertically as it would be with typical juicer where the user takes the carrot and moves it vertically into the juicer.

The present invention allows to maintain carrots intact until it is pressed in the juicer. In result the user of the dispenser always receives a juice from fresh carrots and in the addition the dispenser shall not be cleaned from the crusher carrots.

### Brief description of the drawings

The drawings illustrate generally, by way of example, but not by way of limitation, various embodiments of the invention.
Fig. 1 is a front perspective view of a carrot juice dispenser (1) with closed doors (20) and ready for use.
Fig. 2 is a front perspective view of the carrot juice dispenser (1) as seen in Fig. 1, but with open doors (20).
Fig. 3 is a front perspective view of the carrot juice dispenser (1) as seen in Figs. 1 and 2, but with cut-out in a frame structure (2) and doors (20) to illustrate main elements of the invention.
Fig. 4 a principal schematic of the carrot juice dispenser (1) as seen in Figs. 1 to 3 illustrating the principles of the operation.
Fig. 5 is a front perspective view of the carrot juice dispenser (1) as seen in Figs. 1 to 3 illustrating travel of carrots (11) along the dispenser (1).

### Detailed description of the embodiments

The preferred embodiments of the invention are now described with reference to the figures to illustrate objectives, advantages, and efficiency of the present invention.

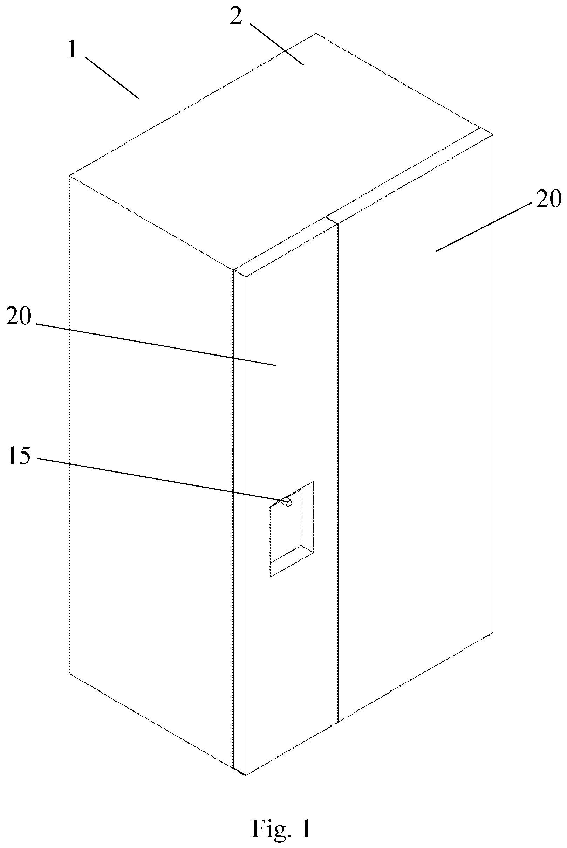

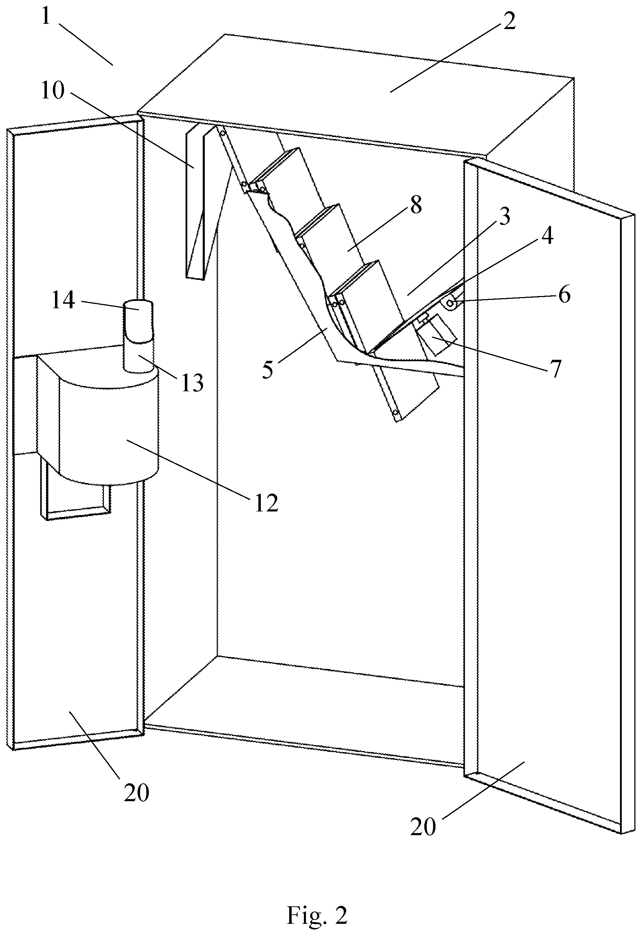

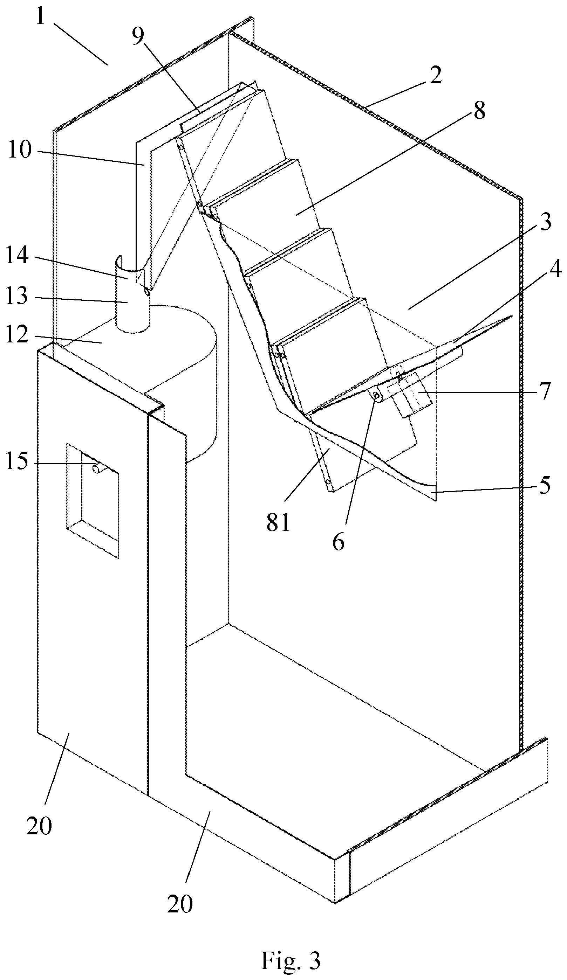

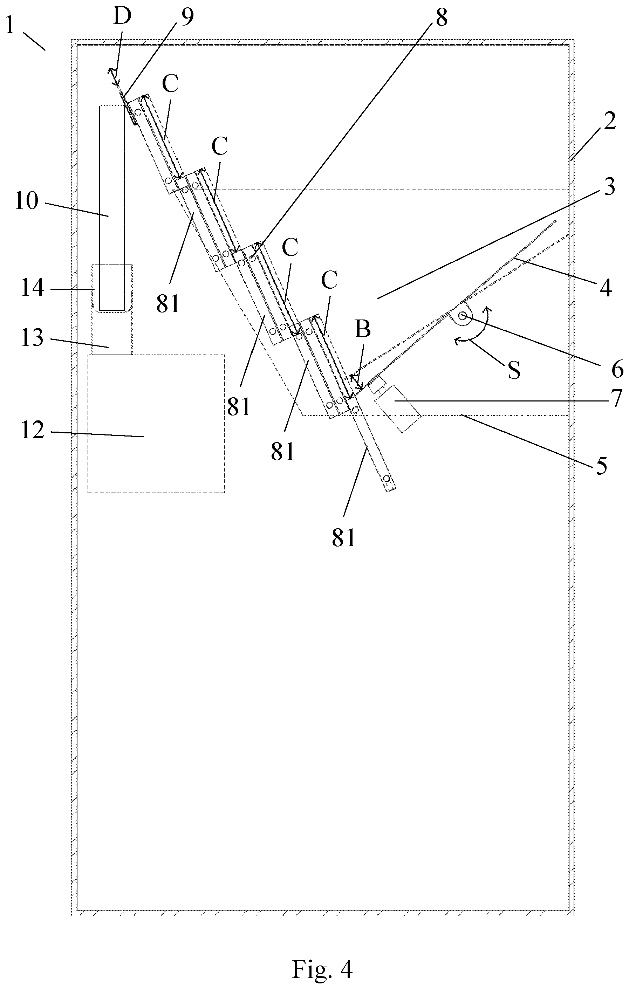

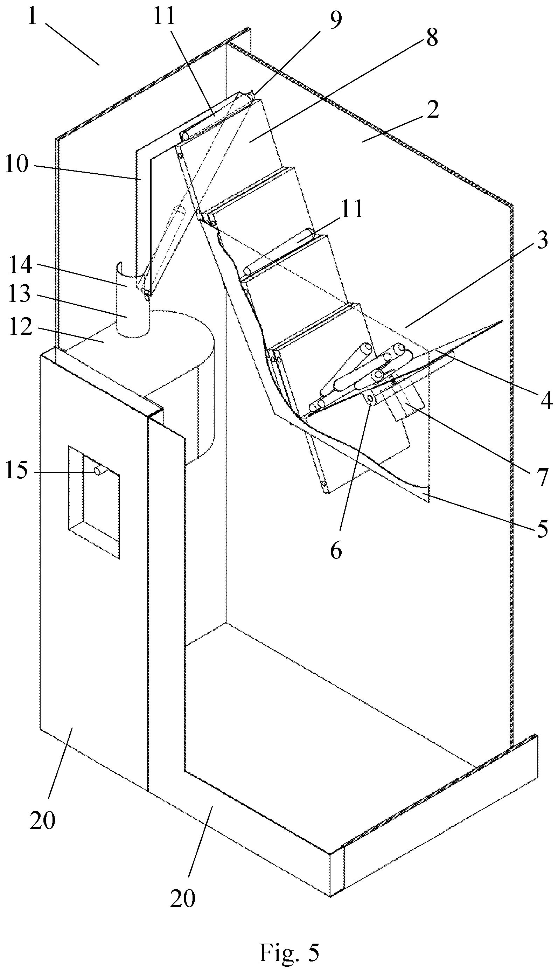

Figs. 1 to 5 illustrates one embodiments of the invention from various perspectives. The carrot juice dispenser (1) comprises a frame structure (2) in the form of sheet metal construction. The frame structure (2) forms a casing, and this casing is further enclosed by two doors (20). The dispenser (1) comprises a bunker (3) configured to store carrots (11). The bunker (3) comprises a bunker floor (4), two side walls (5). In presented embodiments of the invention one side wall (5) is made as an additional sheet metal side wall (5), but another side wall is integral part of the frame structure (2). The bunker floor (4) comprises an axle (6) arranged in the middle section thereof so that the bunker floor (4) may swing (S) around said axle (6). A reciprocating means (7) in the form of cylinder is connected to the bunker floor (4) so that the reciprocating means (7) provides reciprocating motion (B) to the bunker floor (4), in result of which the bunker floor (4) swings (S) around said axle (6). The dispenser (1) further comprises a step feeder (8). The step feeder (8) is arranged to the bunker floor (4) so that the step feeder (8) forms one wall of the bunker (3) and is configured to collect carrots (11) from said bunker (3) and move collected carrots (11) upwards by means of reciprocating motion (C) of steps (81) of the step feeder (8). The dispenser (1) further comprises a buffer zone gate (9) arranged at the upper edge of the step feeder (8) and configured to hold at least one carrot (11) and release hold carrot (11) by opening the buffer zone gate (9). The opening of the buffer zone gate (9) is provided by a reciprocating motion (D) of the buffer zone gate (9). The dispenser further comprises a gravity chute (10) arranged at the upper edge of the step feeder (8) and configured to receive the carrot (11) from the buffer zone gate (9) and to slide the carrot (11) under a gravity to an entrance (13) of a juicer (12) and into it. The gravity chute (10) is inclined by about 45 degrees in relation to the horizontal buffer zone gate (9). The carrot (11) falls from the buffer zone gate (9) onto the gravity chute (10) and slides down to an entrance (13) of the juicer (12) and into said juicer (12). The dispenser (1) further comprises a deflection wall (14) arranged at the end of the gravity chute (10) so that the carrot (10) exiting the gravity chute (10) bounces into the deflection wall (14) and fall into the juicer (12) in vertical orientation. The juicer (12) is configured to extract a carrot juice from the carrot/-s (11) and dispense said carrot juice through a juicer outlet (15).

While the invention may be susceptible to various modifications and alternative forms, specific embodiments of which have been shown by way of example in the figures and have been described in detail herein, it should be understood that the invention is not intended to be limited to the particular forms disclosed. Rather, the invention includes all modifications, equivalents, and alternatives falling within the scope of the invention as defined by the following claims.

## Claims

1. A carrot juice dispenser (1) comprising:
a frame structure (2);
a bunker (3) configured to store carrots (11), wherein the bunker (3) comprises a bunker floor (4), two side walls (5), wherein the bunker floor (4) comprises an axle (6) so that the bunker floor (4) may swing (S) around said axle (6), and a reciprocating means (7) configured to provide reciprocating motion (B) to the bunker floor (4) so that the bunker floor (4) can swing (S) around said axle (6);
a feeder (8),
a buffer zone gate (9) arranged at the upper edge of the step feeder (8) and configured to hold at least one carrot (11) and release hold carrot (11) by opening the buffer zone gate (9);
a gravity chute (10) arranged at the upper edge of the step feeder (8) and configured to receive the carrot (11) from the buffer zone gate (9) and to slide the carrot (11) under a gravity to an entrance (13) of a juicer (12) and into it,
**characterized in that**
the feeder (8) is a step feeder (8), wherein the step feeder (8) is arranged to the bunker floor (4) so that the step feeder (8) forms one wall of the bunker (3) and is configured to collect carrots (11) from said bunker (3) and move collected carrots (11) upwards by means of reciprocating motion (C) of steps (81) of the step feeder (8); and
the gravity chute (10) is so inclined that the carrot (11) is repositioned from generally horizontal orientation at the buffer zone gate (9) to generally vertical position at the entrance (13) into the juicer (12), and wherein the juicer (12) is configured to extract a carrot juice from the carrot/-s (11) and dispense said carrot juice through a juicer outlet (15).

2. The dispenser (1) according to claim 1, wherein the entrance (13) of the juicer (12) comprises a deflection wall (14) arranged at the end of the gravity chute (10) so that the carrot (10) exiting the gravity chute (10) bounces into the deflection wall (14) and fall into the juicer (12) in vertical orientation.

3. The dispenser (1) according to claim 1 or 2, wherein the axle (6) is arranged in the middle section or at one of the end sections of the bunker floor (4).

4. The dispenser (1) according to any of preceding claims 1 to 3, wherein at least one side wall (5) is integral part of the frame structure (2).

5. The dispenser (1) according to any of preceding claims 1 to 3, wherein the reciprocating means (7) is selected from the group comprising a pneumatic cylinder, a hydraulic cylinder, electric motor with a cam, crank mechanism and motorized linear slide.

6. The dispenser (1) according to any of preceding claims 1 to 3, wherein the reciprocating motion (C) of the steps (81) of the step feeder (8) and reciprocating motion (D) of the buffer zone gate (9) is provided by a pneumatic cylinder, a hydraulic cylinder or motorized linear slide.

## Patentansprüche

1. Karottensaftspender (1) mit:
einer Rahmenkonstruktion (2);
einen Behälter (3) zum Aufbewahren von Karotten (11), wobei der Behälter (3) einen Behälterboden (4) und zwei Seitenwände (5) umfasst, wobei der Behälterboden (4) eine Achse (6) umfasst, so dass der Behälterboden (4) um die Achse (6) schwingen (S) kann, und eine Hin- und Herbewegungs Vorrichtung (7), die so konfiguriert ist, dass sie eine Hin- und Herbewegung (B) auf den Bunkerboden (4) ausübt, so dass der Bunkerboden (4) um die Achse (6) schwingen (S) kann;
eine Zuführung (8),
ein Pufferzonenventil (9), das an der Oberkante der Stufenfördereinrichtung (8) angeordnet und so konfiguriert ist, dass es mindestens eine Karotte (11) hält und die gehaltene Karotte (11) durch Öffnen des Pufferzonenventils (9) freigibt;
eine Schwerkraftrinne (10), die an der Oberkante des Stufenförderers (8) angeordnet und so ausgebildet ist, dass sie die Karotte (11) von der Pufferzonenklappe (9) aufnimmt und die Karotte (11) unter Schwerkraft zu einem Eingang (13) eines Entsafters (12) und in diesen hinein gleiten lässt,
**dadurch gekennzeichnet, dass**
der Zuführer (8) ein Stufenförderer (8) ist, wobei der Stufenförderer (8) so am Bunkerboden (4) angeordnet ist, dass der Stufenförderer (8) eine Wand des Bunkers (3) bildet und so ausgebildet ist, dass er Karotten (11) aus dem Bunker (3) sammelt und die gesammelten Karotten (11) durch eine Hin- und Herbewegung (C) der Stufen (81) des Stufenförderers (8) nach oben bewegt; und
die Schwerkraftrinne (10) so geneigt ist, dass die Karotte (11) aus einer im Wesentlichen horizontalen Ausrichtung an der Pufferzonenklappe (9) in eine im Wesentlichen vertikale Position am Eingang (13) in den Entsafter (12) gebracht wird, und wobei der Entsafter (12) so konfiguriert ist, dass er Karottensaft aus der/den Karotte(n) (11) extrahiert und den Karottensaft durch einen Entsafterauslass (15).

2. Der Spender (1) nach Anspruch 1, wobei der Eingang (13) der Saftpresse (12) eine Ablenkwand (14) umfasst, die am Ende der Schwerkraftrutsche (10) so angeordnet ist, dass die Karotte (10), die die Schwerkraftrutsche (10) verlässt, gegen die Ablenkwand (14) prallt und in vertikaler Ausrichtung in die Saftpresse (12) fällt.

3. Der Spender (1) nach Anspruch 1 oder 2, wobei die Achse (6) in dem Mittelteil oder an einem der Endteile des Bunkerbodens (4) angeordnet ist.

4. Der Spender (1) nach einem der vorstehenden Ansprüche 1 bis 3, wobei mindestens eine Seitenwand (5) integraler Bestandteil der Rahmenkonstruktion (2) ist.

5. Der Spender (1) nach einem der vorstehenden Ansprüche 1 bis 3, wobei die Hin- und Herbewegungs Einrichtung (7) aus der Gruppe ausgewählt ist, die einen Pneumatik Zylinder, einen Hydraulikzylinder, einen Elektromotor mit Nocken, einen Kurbelmechanismus und einen motorisierten Linearschieber umfasst.

6. Der Spender (1) nach einem der vorstehenden Ansprüche 1 bis 3, wobei die Hin- und Herbewegung (C) der Stufen (81) des Stufenförderers (8) und die Hin- und Herbewegung (D) der Pufferzonenklappe (9) durch einen Pneumatik Zylinder, einen Hydraulikzylinder oder einen motorisierten Linearschieber bereitgestellt wird.

## Revendications

1. Distributeur de jus de carotte (1) comprenant:
une structure de châssis (2);
un réservoir (3) configuré pour stocker des carottes (11), dans lequel le réservoir (3) comprend un fond de réservoir (4), deux parois latérales (5), dans lequel le fond de réservoir (4) comprend un axe (6) de sorte que le fond de réservoir (4) peut pivoter (S) autour dudit axe (6), et un moyen de va-et-vient (7) configuré pour fournir un mouvement de va-et-vient (B) au fond de trémie (4) de manière à ce que le fond de trémie (4) puisse pivoter (S) autour dudit axe (6);
un dispositif d'alimentation (8);
une porte de zone tampon (9) disposée au niveau du bord supérieur du dispositif d'alimentation à gradins (8) et configurée pour retenir au moins une carotte (11) et libérer la carotte retenue (11) en ouvrant la porte de zone tampon (9);
une goulotte gravitaire (10) disposée au niveau du bord supérieur du dispositif d'alimentation à gradins (8) et configurée pour recevoir la carotte (11) provenant de la porte de zone tampon (9) et pour faire glisser la carotte (11) sous l'effet de la gravité vers une entrée (13) d'un extracteur de jus (12) et à l'intérieur de celui-ci,
**caractérisé en ce que**
le dispositif d'alimentation (8) est un dispositif d'alimentation à gradins (8), dans lequel le dispositif d'alimentation à gradins (8) est disposé sur le fond de la trémie (4) de telle sorte que le dispositif d'alimentation à gradins (8) forme une paroi de la trémie (3) et est configuré pour collecter les carottes (11) provenant de ladite trémie (3) et déplacer les carottes collectées (11) vers le haut au moyen d'un mouvement alternatif (C) des gradins (81) du dispositif d'alimentation à gradins (8); et
la goulotte gravitaire (10) est inclinée de telle sorte que la carotte (11) passe d'une orientation généralement horizontale au niveau de la porte de la zone tampon (9) à une position généralement verticale à l'entrée (13) dans l'essoreuse (12), et dans lequel l'essoreuse (12) est configurée pour extraire le jus des carottes (11) et distribuer ledit jus de carotte par une sortie d'essoreuse (15).

2. Le distributeur (1) selon la revendication 1, dans lequel l'entrée (13) de l'essoreuse (12) comprend une paroi de déviation (14) disposée à l'extrémité de la goulotte gravitaire (10) de telle sorte que la carotte (10) sortant de la goulotte gravitaire (10) rebondit contre la paroi de déviation (14) et tombe dans l'essoreuse (12) dans une orientation verticale.

3. Le distributeur (1) selon la revendication 1 ou 2, dans lequel l'axe (6) est disposé dans la partie centrale ou à l'une des parties d'extrémité du fond de la trémie (4).

4. Le distributeur (1) selon l'une quelconque des revendications 1 à 3, dans lequel au moins une paroi latérale (5) fait partie intégrante de la structure de châssis (2).

5. Le distributeur (1) selon l'une quelconque des revendications 1 à 3, dans lequel le moyen de va-et-vient (7) est choisi parmi le groupe comprenant un vérin pneumatique, un vérin hydraulique, un moteur électrique avec une came, un mécanisme à manivelle et un coulisseau linéaire motorisé.

6. Le distributeur (1) selon l'une quelconque des revendications 1 à 3, dans lequel le mouvement alternatif (C) des étages (81) du dispositif d'alimentation par étages (8) et le mouvement alternatif (D) de la porte de la zone tampon (9) sont assurés par un vérin pneumatique, un vérin hydraulique ou un coulisseau linéaire motorisé.
